# EUROPEAN PATENT APPLICATION

(11) **EP 2 790 371 A1**
(43) Date of publication of application: **15.10.2014**
(21) Application number: 13305451.0
(22) Date of filing: 08.04.2013
(51) Int. Cl.: H04L 29/06

(54) **Device and method for adapting a manifest sent by at least one server.**

(71) Applicant: Thomson Licensing, 92130 Issy-les-Moulineaux (FR)
(72) Inventor: Delaunay, Christophe, 35576 CESSON SEVIGNE (FR); Gouache, Stephane, 35576 CESSON SEVIGNE (FR); Houdaille, Rémi, 35576 CESSON SEVIGNE (FR)
(74) Representative: Huchet, Anne

(57) **Abstract**

The invention concerns a device for adapting a manifest sent by at least one server and associated to a multimedia content requested by a client terminal, said manifest comprising a plurality of listed representations of said multimedia content. According to the invention, said device comprises:
- means (13) for intercepting said manifest;
- means (14) for estimating the achievable data rate of at least a part of the path between the client terminal and said server;
- means (15) for selecting, among the plurality of listed representations of said intercepted manifest, the first representation having an associated bitrate at most equal to the estimated achievable data rate;
- means (16) for delivering to the client terminal an adapted manifest, wherein the selected representation is highlighted.

## Description

### FIELD OF THE INVENTION

The present invention relates generally to the domain of the adaptive streaming over, for instance but not exclusively, HTTP (HyperText Transfer Protocol) and, in particular, to a device and a method for adapting a manifest sent by one or several servers and associated to a multimedia content requested by the client terminal.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

When a client terminal wants to play an audiovisual content (or A/V content) in adaptive streaming, it first has to get a file describing how this A/V content can be obtained. This is done through the HTTP protocol by getting a descripting file, so-called manifest, from an URL (Uniform Resource Locator). The manifest basically lists the available representations of such an A/V content (in terms of bitrate, resolution and other properties). Said manifest is generated in advance and delivered to the client terminal by, for instance, a remote server.

Indeed, the stream of data is available on an HTTP server with different qualities. The highest quality has a high bit rate, the lowest quality has a low bit rate. This allows distribution to many different terminals which can be subject to highly varying network conditions.

The whole data stream is divided into chunks which are made such that a client terminal may smoothly switch from one quality level to another between two chunks. As a result, the video quality may vary while playing but rarely freezes.

The data stream is announced to the client terminal as a manifest, which gives, among other things, a set of representations, one representation per quality level (bit rate). Each representation is made of a series of chunks of equal duration and has a set of descriptive elements attached for selection by the client. Each chunk is accessible by a separate URL.

Depending on the protocol, the manifest can have different formats. For the Apple HLS protocol (HTTP Live Streaming), it is an M3U8 playlist, called the "master playlist". Each element of this playlist is another playlist, (one per representation). According to other protocols (DASH for instance), the manifest is made of one or more XML files describing all the representations one after the other. In any case, creating the manifest is as simple as creating a text file and writing the text according to a deterministic grammar.

It is known that the order of the listed representations does not matter, except at start time, wherein the first representation is interpreted - by convention - as the suggested or preferred representation by the client terminal.

However, this recommendation is only based on static content characteristics (resolution, number of audio channels, etc.). Therefore, chances that the client terminal requests the optimal bit rate at startup are really low. It then needs to later converge to the optimal bit rate by itself, meaning that the first impression for the end-user starting to watch a streaming movie might be poor.

The present invention attempts to remedy at least the above mentioned drawback by improving, in particular, chances a client terminal requests the optimal representation at startup, yielding a better user experience from the very beginning of the streaming session.

### SUMMARY OF THE INVENTION

The invention concerns a device for adapting a manifest sent by at least one server and associated to a multimedia content requested by a client terminal, said manifest comprising a plurality of listed representations of said multimedia content,
which is worthy in that it comprises:
- means for intercepting said manifest;
- means for estimating the achievable data rate of at least of a part of the path between the client terminal and said server;
- means for selecting, among the plurality of listed representations of said intercepted manifest, the first representation having an associated bitrate at most equal to the estimated achievable data rate;
- means for delivering to the client terminal an adapted manifest, wherein the selected representation is highlighted.

Thus, thanks to the present invention, if the highlighted representation of a manifest is selected by the client terminal, the first downloaded chunks will be chosen from this recommended representation. If the bit rate of this recommended representation is close to the estimated achievable data rate, the client is then expected to start at the optimal bit rate - which is rarely the case when the manifest is built without taking this consideration into account - yielding a better user experience from the very beginning of the streaming session. This obviously results in a much improved first impression for the end-user.

In other words, the present invention takes into account the networking connectivity parameters of the client terminal (type of access network, current data rate, etc.) which are by definition specific to each client terminal.

In another aspect of the present invention, said device further comprises:
- a first interface to at least a first network comprising said client terminal;
- a second interface to at least a second network comprising said server.

Preferably, said device is a proxy device such as an Internet gateway, a Wi-Fi hotspot, a femtocell or any device able to monitor the available throughput and able, for instance, to intercept and modify an HTTP adaptive streaming manifest.

Advantageously, the highlighting of the selected representation might be obtained by annotating said selected representation in the adapted manifest.

In a variant compliant with the present invention, the highlighting of the selected representation might be obtained by arranging the selected representation in the first position of the listed representations in the adapted manifest.

According to an example of the present invention, said server is compliant with at least one HTTP adaptive streaming protocol.

Besides, the present invention also concerns a method for adapting a manifest sent by at least one server and associated to a multimedia content requested by the client terminal, said manifest comprising a plurality of listed representations of said multimedia content.

According to the invention, said method comprises the following steps of:
- intercepting said manifest;
- estimating the achievable data rate of at least a part of the path between the client terminal and said server;
- selecting, among the plurality of listed representations of said intercepted manifest, the first representation having an associated bitrate at most equal to the estimated achievable data rate;
- delivering an adapted manifest to the client terminal, wherein the selected representation is highlighted.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

### BRIEF DESCRIPTION OF THE DRAWINGS

The invention will be better understood and illustrated by means of the following embodiment and execution examples, in no way limitative, with reference to the appended figures on which:
- Figure 1 is a schematic diagram of a Client-Server network architecture wherein the present invention might be implemented;
- Figure 2 is a block diagram of an example of a client terminal according to a preferred embodiment of the present invention;
- Figure 3 is a block diagram of an example of a gateway able to adapt a manifest according to the preferred embodiment;
- Figure 4 is flow chart depicting a method for adapting a manifest sent by a server and associated to a multimedia content requested by the client terminal according to the preferred embodiment.

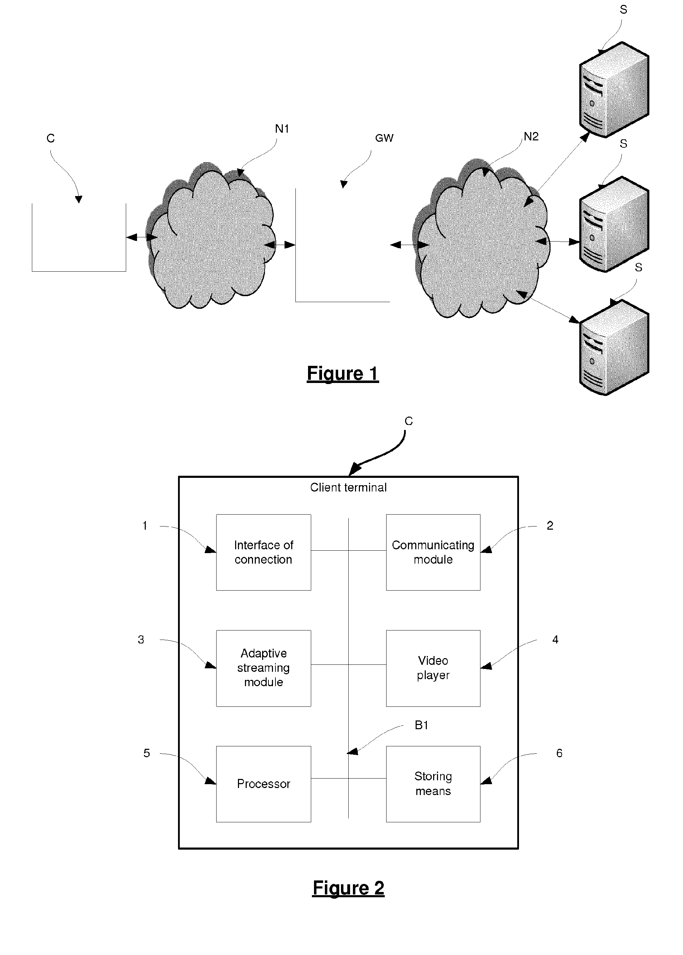

In Figures 1 to 3, the represented blocks are purely functional entities, which do not necessarily correspond to physically separate entities. Namely, they could be developed in the form of software, hardware, or be implemented in one or several integrated circuits.

Wherever possible, the same reference numerals will be used throughout the figures to refer to the same or like parts.

### DETAILED DESCRIPTION OF PREFERRED EMBODIMENTS

It is to be understood that the figures and descriptions of the present invention have been simplified to illustrate elements that are relevant for a clear understanding of the present invention, while eliminating, for purposes of clarity, many other elements found in typical digital multimedia content delivery methods and systems. However, because such elements are well known in the art, a detailed discussion of such elements is not provided herein. The disclosure herein is directed to all such variations and modifications known to those skilled in the art.

According to a preferred embodiment, the present invention is depicted with regard to the HTTP adaptive streaming protocol. Naturally, the invention is not restricted to such a particular environment and other adaptive streaming protocol could of course be considered and implemented.

As depicted in Figure 1, the Client-Server network architecture, wherein a device for adapting a manifest according to the present invention might be integrated, comprises a client terminal C, a gateway GW and one or more HTTP servers S.

The client terminal C - connected to the gateway GW through a first network N1 (as a home network) - wants to connect to one or more HTTP servers S through a second network N2 (as the Internet network). The first network N1 is connected to the second network N2 thanks to the gateway GW.

The HTTP servers S stream chunks to the client terminal C, upon the client request, using HTTP adaptive streaming protocol over one or more TCP/IP connections. Obviously, in a variant, only one HTTP server S can stream chunks to the client terminal C.

According to the preferred embodiment as described in Figure 2, the client terminal C comprises at least:
- an interface of connection 1 (wired and/or wireless, as for example Wi-Fi, Ethernet, etc.) to the home network N1;
- a communicating module 2 containing the protocol stacks to communicate to the HTTP servers S. In particular the communicating module 2 comprises the TCP/IP stack well known in the art. Of course, it could be any other type of network and/or communicating means enabling the client terminal C to communicate to the HTTP servers S;
- an adaptive streaming module 3 which receives the HTTP streaming multimedia content from the HTTP servers S. It continually selects the chunk at the bit rate that better matches the network constraints and its own constraints;
- a video player 4 adapted to decode and render the multimedia content;
- a processor 5 for executing the applications and programs stored in a non-volatile memory of the client terminal C;
- storing means 6, such as a volatile memory, for buffering the chunks received from the HTTP servers S before their transmission to the video player 4;
- an internal bus B1 to connect the various modules and all means well known to the skilled in the art for performing the generic client terminal functionalities.

In the preferred embodiment, the client terminal C is a portable media device, a mobile phone, a tablet or a laptop. Naturally, the client terminal C might not comprise any video player, but rather an interface to connect a video player. In this case, the client terminal C is a video decoder, such as a set-top box.

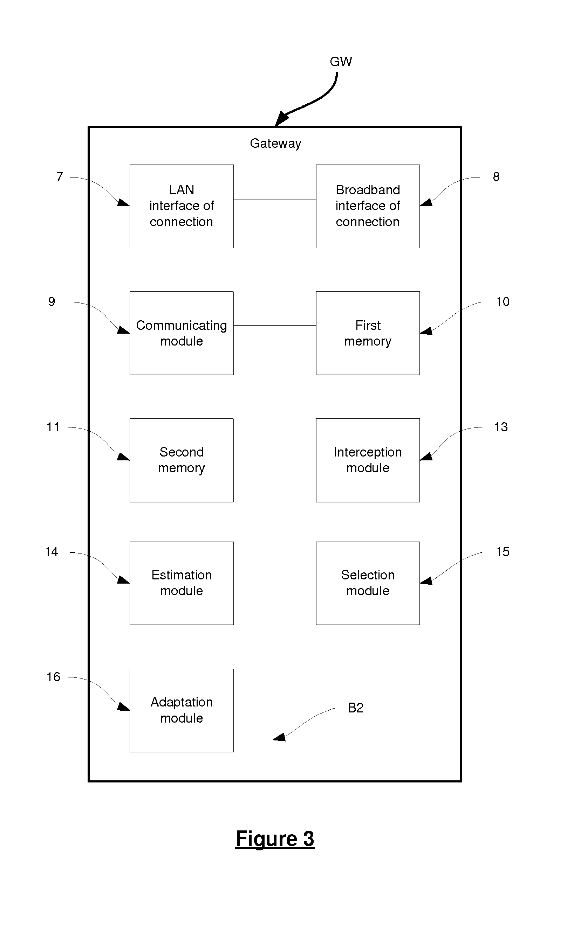

Moreover, as shown in Figure 3, the gateway GW of the preferred embodiment is a Digital Subscriber Line (DSL) gateway, providing an Internet broadband access to the home network N1 through the DSL technology. Of course, the gateway could be any type of broadband gateway such as cable, fiber or wireless.

In said preferred embodiment, the gateway GW comprises at least:
- a LAN (Local Area Network) interface of connection 7 (wired and/or wireless, as for example Wi-Fi, Ethernet, etc.) to the home network N1;
- a broadband interface of connection 8 (wired and/or wireless) to the Internet network N2; and
- a communicating module 9 comprising the protocol stacks to communicate through the interfaces of connection. In particular, the communicating module comprises an Internet Protocol stack, noted IP stack;
- a first and a second memories 10 and 11. The first memory 10 is adapted to store information extracted from the manifest, (playlist or XML files for instance). The second memory 11 is adapted to buffer the packets/chunks received from and sent to the interfaces 7 and 8;
- an internal bus B2 to connect the various modules and processing means, routing and bridging means and all means well known to the skilled in the art for performing the generic residential gateway functionalities.

As previously described, to play a multimedia content (e.g. a movie) in adaptive streaming, the client terminal C first needs to obtain a manifest listing the available representations, in terms of bitrate and resolution, of the requested multimedia content. This manifest has been generated in advance and stored on the HTTP servers S.

According to the invention, the gateway GW is able to perform an adaption of a manifest sent by one or more HTTP servers S upon a client request of a multimedia content.

To this end, the gateway GW further comprises:
- an interception module 13 adapted to analyze the streams received at the gateway GW. Each time the client terminal C issues a service request addressed to the HTTP servers S, the interception module 13 identifies said request and collects service information by intercepting the manifest which is returned in response from the HTTP servers S to the client terminal C. It intercepts and analyzes the manifest. Analyzing the manifest allows, in particular, to extract information such as the bit rates announced by the server and the associated segments URLs. To intercept the manifest, the interception module 13 is aware of the available streaming techniques and of the associated protocols. For each protocol, it knows the type of packets that transports the manifest. In particular, the interception module 13 is, for instance, aware of the Apple HTTP Live Streaming, the Microsoft Smooth Streaming and the Adobe Open Source Media Framework techniques. Of course, it can be configured to be made aware of other streaming techniques;
- an estimation module 14 configured for estimating the achievable data rate of the path (e.g. network segment(s) possibly being the bottleneck, as the access link or home Wi-Fi access point) between the client terminal C and the HTTP servers S. For instance, if the client terminal C is connected through Wi-Fi, the achievable data rate might be obtained by extrapolating physical transmission parameters, such as halving the raw data rate to obtain the achievable TCP throughput. Alternatively, it is possible to determine at which Wi-Fi modulation the client terminal C is operated and, from this Wi-Fi modulation, the available bandwidth between the gateway GW and the client terminal C. In another variant, with the ADSL protocol, the number of sub-carriers used is determined according to the characteristics of the access link: non-working sub-carriers are removed. The determination of the data rate of the access link can be approximately obtained from the efficient sub-carriers. The ADSL synchronization bit rate can be used to infer the achievable throughput on the access link;
- a selection module 15 adapted for selecting, among the plurality of listed representations of an intercepted manifest, the first representation of the list having an associated bitrate lower or equal to the estimated achievable data rate. In other words, the selected representation of the intercepted manifest is the one whose the associated bitrate is the closest of the estimated achievable data rate, but lower (or equal to) the latter; and
- an adaption module 16 configured for modifying, if necessary, the intercepted manifest and for delivering said modified manifest - also called adapted manifest - to the client terminal C. In particular, in the adapted manifest, the representation selected by the selection module 15 is highlighted (namely emphasized). Apart from that, all other information contained in the manifest might preferably be unchanged. In particular, for compatibility with any filtering, advertisement insertion, or any other manifest modification techniques, all the representations described in the original manifest are preferably described in the adapted manifest.

According to the invention, different ways for highlighting the selected representation can be implemented, which might depend on the streaming techniques used (Apple HLS, Microsoft Smooth Streaming, DASH, etc.).

Thus, a first technique consists of annotating the selected representation, for example by adding a specific tag to the latter in order to recommend the selected representation. This first technique might be especially worthy in the case of the DASH protocol, since the manifest is an XML file which can accept such an additional annotation. In this case, the order of the listed representations might be unchanged, only the selected and recommended representation is tagged.

Another technique for highlighting the selected representation in the adapted manifest may reorder the listed representations, or at least a part of them, to arrange the selected and recommended representation on the top of the list. In fact, the Applicant has observed that the current players of streaming content usually select the first representation listed in the manifest, leading to the conclusion that, if the selected representation is arranged in the first position, players will choose it at first.

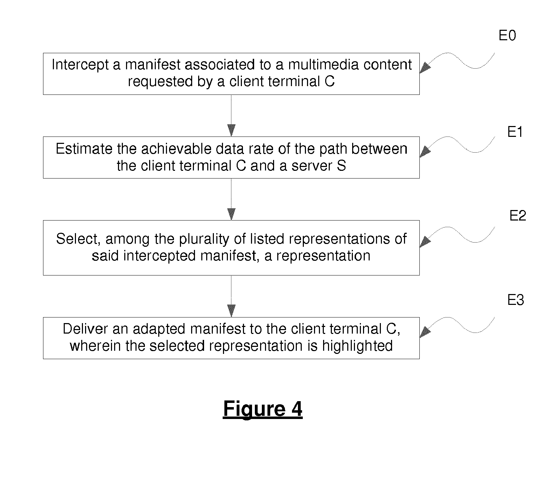

Besides, the flow chart depicted in Figure 4 describes the steps of the method for adapting a manifest sent by the servers S and associated to a multimedia content requested by the client terminal C, according to the preferred embodiment of the present invention.

In particular, in a preliminary step E0, the gateway GW intercepts the manifest sent by the servers S and associated to the multimedia content which has been requested by the client terminal C.

In a further step E1, the gateway GW estimates the achievable data rate of at least a part of the path between the client terminal C and the servers S.

In a further step E2, the gateway GW selects, among the plurality of listed representations of said intercepted manifest, the first representation having an associated bitrate at most equal to the estimated achievable data rate. The selected representation is also called recommended representation.

In a further step E3, the gateway GW delivers an adapted manifest to the client terminal C, wherein the selected representation is highlighted according to a technique as above specified.

Thanks to the present invention, the recommended representation is highlighted in the adapted manifest, before being forwarded to the client terminal C. As a result, the client terminal C is expected to request the representation associated with the optimal bit rate at startup. The first downloaded chunks will be chosen from this recommended representation. If the bit rate of this recommended representation is close to the estimated achievable data rate, the client is then expected to start at an optimal bit rate. The first impression of the end-user will be increased at the beginning of the streaming session, in comparison with current techniques.

Of course, since the adapted manifest comprises all the other representations proposed by the servers S, the terminal client C can later converge to a new optimal bit rate by itself.

As previously described, the present invention can be implemented in an intermediate device (also called proxy device), such as an Internet gateway, a Wi-Fi hotspot, a femtocell or any device able to monitor the available throughput and able to intercept and modify an HTTP streaming manifest.

Naturally, in a variant, the present invention might be implemented in a proxy, arranged in a device or located in the cloud, adapted to change the manifest, which is distinct from the equipment controlling the physical network link, as long as the proxy is able to get the throughput information from this equipment. This allows to manage more complex network configurations, such as the case of several network segments possibly being the bottleneck. The proxy then may get information from the various network nodes and may determine the lowest available bandwidth, which will be the target selecting the appropriate representation. For instance in a home network, both the ADSL access link and a home Wi-Fi access point may be in the path and are both subject to variable limitations in bandwidth.

It has to be noted that several proxy devices according to the invention might be arranged at different locations of the Client-Server architectures (e.g. one proxy device in a DSLAM and another one in a gateway). Indeed, a manifest could be adapted by the first proxy device located in the DSLAM to regulate the traffic between subscribers. Then, another adaption of said adapted manifest might be performed by the second proxy device (in the example the gateway) in order to better manage the bandwidth of the home network.

In another embodiment of the present invention, the manifest may be generated on the fly (e.g. in the case of live transcoding) with the same benefits. In such case, the manifest production stage is either modified to implement the aforementioned method, or the previously described invention is appended to the manifest generation stage.

References disclosed in the description, the claims and the drawings may be provided independently or in any appropriate combination. Features may, where appropriate, be implemented in hardware, software, or a combination of the two.

Reference numerals appearing in the claims are by way of illustration only and shall have no limiting effect on the scope of the claims.

This invention having been described in its preferred embodiment, it is clear that it is susceptible to numerous modifications and embodiments within the ability of those skilled in the art and without the exercise of the inventive faculty. Accordingly, the scope of the invention is defined by the scope of the following claims.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

## Claims

1. Device for adapting a manifest sent by at least one server (S) and associated to a multimedia content requested by a client terminal (C), said manifest comprising a plurality of listed representations of said multimedia content,
characterized it comprises:
- means (13) for intercepting said manifest;
- means (14) for estimating the achievable data rate of at least a part of the path between the client terminal (C) and said server (S);
- means (15) for selecting, among the plurality of listed representations of said intercepted manifest, the first representation having an associated bitrate at most equal to the estimated achievable data rate;
- means (16) for delivering to the client terminal (C) an adapted manifest, wherein the selected representation is highlighted.

2. Device according to the preceding claim, further comprising:
- a first interface (7) to at least a first network (N1) comprising said client terminal (C);
- a second interface (8) to at least a second network (N2) comprising said server (S).

3. Device according to any of the preceding claims, which is a proxy device (GW).

4. Device according to any of the preceding claims, wherein the highlighting of the selected representation is obtained by annotating said selected representation in the adapted manifest.

5. Device according to any of the claims 1 to 3, wherein the highlighting of the selected representation is obtained by arranging the selected representation in the first position of the listed representations in the adapted manifest.

6. Device according to any of the preceding claims, wherein said server (S) is compliant with at least one HTTP adaptive streaming protocol.

7. Method for adapting a manifest sent by at least one server and associated to a multimedia content requested by a client terminal (C), said manifest comprising a plurality of listed representations of said multimedia content,
**characterized in that** it comprises the following steps of:
- intercepting said manifest;
- estimating the achievable data rate of at least a part of the path between the client terminal (C) and said server (S);
- selecting, among the plurality of listed representations of said intercepted manifest, the first representation having an associated bitrate at most equal to the estimated achievable data rate;
- delivering an adapted manifest to the client terminal (C), wherein the selected representation is highlighted.
